# FASCICULE DE BREVET EUROPEEN

(11) **EP 3 114 539 B1**
(45) Date de publication et mention de la délivrance du brevet: **17.06.2020**
(21) Numéro de dépôt: 15707402.2
(22) Date de dépôt: 04.03.2015
(51) Int. Cl.: G05D 1/00

(54) **PROCÉDÉ DE CONTRÔLE D'UNE PLURALITÉ DE MOBILES AUTONOMES SANS PILOTE**
VERFAHREN ZUR STEUERUNG EINER VIELZAHL VON UNBEMANNTEN AUTONOMEN FAHRZEUGEN
METHOD OF CONTROL OF A PLURALITY OF PILOTLESS AUTONOMOUS CRAFT

(30) Priorité: 04.03.2014 FR 1400538
(43) Date de publication de la demande: 11.01.2017
(73) Titulaire: THALES, 92400 Courbevoie (FR)
(72) Inventeur: DREO, Johann, 91767 Palaiseau Cedex (FR); GALIMBERTI, Arnaud, 91767 Palaiseau Cedex (FR); LAMARQUE, Thierry, 91767 Palaiseau Cedex (FR)
(74) Mandataire: Lavoix
(86) Numéro de dépôt international: PCT/EP2015/054545
(87) Numéro de publication internationale: WO 2015/132309

(56) Documents cités:
- EP-A1- 2 645 196
- US-A1- 2010 312 388
- US-A1- 2011 029 804

## Description

La présente invention concerne un procédé de contrôle d'une pluralité de mobiles autonomes sans pilote, un programme d'ordinateur associé, un système de contrôle des mobiles autonomes sans pilote associé et un ensemble comprenant un tel système de contrôle et des mobiles.

L'invention se situe dans le domaine des systèmes de contrôle et de supervision d'une flotte de mobiles autonomes sans pilote, plus simplement appelés mobiles. De tels systèmes ont vocation à permettre d'assurer le contrôle de tout ou partie des fonctions des mobiles, telles que la navigation des mobiles de la flotte, ainsi que d'interagir avec des charges utiles embarquées à bord des mobiles de la flotte, telles que par exemple des caméras d'observation du domaine visible, du domaine infrarouge, etc.

Des systèmes de contrôle de ce type ont été divulgués dans les documents US 2010/0312388 A1, EP 2645196 A1 et US 2011/0029804 A1.

Les systèmes de contrôle connus, permettent l'affichage, sur un dispositif d'affichage, d'éléments graphiques actifs via lesquels un opérateur interagit soit directement avec les mobiles, soit avec les éléments graphiques en question. Pour ce faire, l'opérateur du système sélectionne le mobile avec lequel l'opérateur souhaite interagir, par exemple en activant une icône à cet effet, avant de saisir les commandes désirées via une interface de commande.

De tels systèmes présentent des inconvénients. En effet, le nombre d'actions requises par l'opérateur avant que l'opérateur soit apte à interagir avec un mobile en particulier est élevé, ce qui a pour effet à la fois de complexifier le traitement des données informatiques permettant à l'opérateur d'interagir avec le mobile, mais aussi d'augmenter le temps de réaction de l'opérateur et la charge cognitive associée à l'utilisation du système de contrôle.

En outre, dans de tels systèmes, afin de limiter le nombre d'actions dévolues à l'opérateur, il est généralement connu de rassembler les mobiles en une seule entité formant une flotte, l'opérateur n'ayant alors qu'un seul objet à gérer où toutes les informations sont agrégées.

Toutefois, de tels systèmes ne permettent pas une gestion individualisée de chaque mobile et, dans de tels systèmes, la planification de tâches à accomplir par la flotte reste complexe à réaliser et la rapidité de réalisation des tâches insuffisante.

Il est également connu des systèmes où l'opérateur sélectionne le mobile à gérer à un instant donné parmi une flotte de mobiles de même type.

Cependant, dans de tels systèmes, la gestion et la planification de tâches à allouer à chaque mobile reste complexe à réaliser pour l'opérateur. En outre, de tels systèmes ne permettent pas une gestion simultanée efficace de chaque mobile.

L'un des objectifs de l'invention est de pallier aux inconvénients précédemment décrits en simplifiant le contrôle des mobiles afin notamment de limiter le nombre d'opérateurs impliqués dans le pilotage des mobiles et la gestion de la charge utile des mobiles. Un objectif de l'invention est notamment de simplifier la planification et l'allocation de tâches, telles que des trajectoires à suivre, pour chaque mobile.

À cet effet, l'invention concerne un procédé de contrôle d'une pluralité de mobiles autonomes sans pilote, le procédé comportant des étapes de fourniture a) de paramètres d'entrée propres à chaque mobile, ainsi que de fourniture b) d'au moins un objectif à remplir par les mobiles. Le procédé comprend également une étape de décomposition c), selon au moins un premier critère, dudit au moins un objectif en plusieurs tâches optimales en fonction des paramètres d'entrée, chaque tâche optimale de chaque objectif étant associée à un mobile différent, le ou les objectifs fournis à l'étape de fourniture b) forment une mission, et suite à l'étape de fourniture b) et précédemment à l'étape de décomposition c), le procédé comprend une étape b') de détermination d'un ordre de réalisation du ou des objectifs de la mission en fonction d'un deuxième critère, l'étape de décomposition c) étant réalisée en fonction de l'ordre.

Grâce à l'invention, chaque objectif est décomposé, selon le ou les premiers critères, en plusieurs tâches en fonction des paramètres d'entrée. Le contrôle des mobiles est ainsi simplifié, puisque le traitement du ou des objectifs est réparti entre les mobiles et facilité via la décomposition des objectifs en tâche. La simplification du contrôle des mobiles permet notamment de diminuer le nombre d'opérateurs impliqués dans le pilotage des mobiles et dans la gestion de la charge utile des mobiles. En outre, la planification et l'allocation des tâches aux mobiles est simplifiée.

Selon des aspects avantageux de l'invention, le procédé de contrôle comprend une ou plusieurs des caractéristiques suivantes, prises isolément ou selon toute combinaison techniquement admissible :
- chaque tâche optimale correspond à une trajectoire à suivre par le mobile auquel la tâche est associée ;
- suite à l'étape de décomposition c) le procédé comprend l'étape suivante : d) l'affectation à chaque mobile de la ou des tâches optimales à laquelle ou auxquelles le mobile est associé suivant ledit ordre ;
- la ou les tâches optimales affectées à chaque mobile lors de l'étape d'affectation d) correspondent à une trajectoire globale à suivre par le mobile, chaque trajectoire globale étant une juxtaposition des tâches affectées au mobile ;
- chaque mobile est adapté pour passer d'un état de participation à la mission à un état d'arrêt de participation à la mission, et suite à l'étape d'affectation d) et précédemment à la fin de la réalisation de la mission par les mobiles, le procédé comprend l'étape suivante : e) la détection du passage d'un ou plusieurs mobiles de l'état de participation à la mission à l'état d'arrêt de participation à la mission et, si lors de l'étape de détection e) ledit passage est détecté, le procédé comprend les étapes suivantes : f) le calcul, pour chaque mobile en état de participation à la mission, d'une nouvelle trajectoire globale à suivre, et g) l'affectation de chaque nouvelle trajectoire globale au mobile associé ;
- suite à l'étape d'affectation d) et précédemment à la fin de la réalisation de la mission par les mobiles, le procédé comprend l'étape suivante : e') le repérage d'une modification d'au moins l'un des paramètres d'entrée et/ou du premier critère et/ou du deuxième critère et, si lors de l'étape de repérage e') ladite modification est repérée, le procédé comprend les étapes suivantes : f') le calcul, pour chaque mobile, d'une nouvelle trajectoire globale à suivre, et g') l'affectation de chaque nouvelle trajectoire globale au mobile associé ;
- lors de l'étape de calcul f), la nouvelle trajectoire globale est calculée en fonction des trajectoires globales affectées aux mobiles précédemment à la détection dudit passage et de parties des trajectoires globales déjà effectuées par les mobiles précédemment à la détection dudit passage ;
- lors de l'étape de calcul f'), la nouvelle trajectoire globale est calculée en fonction des trajectoires globales affectées aux mobiles précédemment au repérage de ladite modification et de parties des trajectoires globales déjà effectuées par les mobiles précédemment au repérage de ladite modification ;
- les mobiles sont adaptés pour évoluer dans un environnement prédéterminé, et précédemment à l'étape de décomposition c) le procédé comprend l'étape suivante : b") la fourniture de paramètres propres à l'environnement prédéterminé, l'étape de décomposition c) étant réalisée en fonction des paramètres propres à l'environnement prédéterminé ;
- les mobiles sont adaptés pour surveiller l'environnement prédéterminé, chaque objectif comprenant au moins la définition d'une zone à surveiller de l'environnement prédéterminé ;
- lors de l'étape de fourniture b) plusieurs objectifs formant la mission sont fournis, et lors de l'étape de détermination b'), le ou les trajets entre chaque zone à surveiller de l'environnement prédéterminé sont calculés, et l'ordre est déterminé notamment en fonction de la ou des mesures d'objectifs liés aux trajets ;
- lors de l'étape de fourniture b) plusieurs objectifs formant la mission sont fournis, et lors de l'étape de détermination b'), la ou les distances entre chaque zone à surveiller de l'environnement prédéterminé sont calculées, et l'ordre est déterminé notamment en fonction de la ou des distances ;
- le deuxième critère correspond à une distance maximale à parcourir par les mobiles à ne pas dépasser ;
- suite à l'étape de décomposition, le procédé comprend l'étape suivante : h) le calcul d'un indicateur représentatif d'un taux de conformité à la mission et/ou au premier critère et/ou au deuxième critère.
- lors de l'étape de calcul h) l'indicateur est fonction des trajectoires globales destinées à être affectées à chaque mobile.

L'invention concerne également un programme d'ordinateur comportant des instructions de code de programmation aptes à être mises en œuvre par un ordinateur, dans lequel le programme est apte à mettre en œuvre le procédé décrit ci-dessus.

L'invention concerne également un système de contrôle d'une pluralité de mobiles autonomes sans pilote, comprenant un premier organe de mémorisation de paramètres d'entrée propres à chaque mobile et un deuxième organe de mémorisation d'au moins un objectif à remplir par les mobiles. Le système comprend un organe de décomposition propre à décomposer, selon au moins un premier critère, le ou chaque objectif en plusieurs tâches optimales en fonction des paramètres d'entrée, chaque tâche optimale de chaque objectif étant associée à un mobile différent, le ou les objectifs mémorisés par le deuxième organe de mémorisation forment une mission, le système comprend un organe de détermination d'un ordre de réalisation du ou des objectifs de la mission en fonction d'un deuxième critère, et l'organe de décomposition est propre à décomposer le ou chaque objectif en plusieurs tâches optimales également en fonction de l'ordre déterminé par l'organe de détermination.

Selon d'autres aspects avantageux de l'invention, le système de contrôle comprend en outre une ou plusieurs des caractéristiques suivantes prises isolément ou selon toute combinaison techniquement admissible :
- chaque tâche optimale correspond à une trajectoire à suivre par le mobile auquel la tâche est associée ;
- le système comprend en outre : un dispositif d'affichage configuré pour l'affichage d'éléments graphiques, parmi lesquels des éléments graphiques actifs sont configurés pour l'interaction d'un opérateur avec le système de contrôle et/ou les mobiles, une interface de commande pour la saisie par l'opérateur de commandes à destination du système de contrôle, et un dispositif de pointage configuré pour détecter une direction pointée par l'opérateur, le système étant configuré pour sélectivement activer l'un d'une pluralité de premiers modes de fonctionnement du système de contrôle respectivement associés à l'un des éléments graphiques actifs en réponse à la détection du pointage de l'opérateur sur l'élément graphique actif correspondant, chaque premier mode de fonctionnement étant configuré pour permettre à l'opérateur d'interagir avec un ou plusieurs éléments graphiques et/ou un ou plusieurs des mobiles via l'interface de commande selon un ensemble de fonctionnalités donné.
- le dispositif d'affichage est configuré pour afficher pour chaque mobile une échelle temporelle et des éléments indicateurs, du ou des objectifs réalisés par chaque mobile au cours du temps, associés à chaque échelle temporelle.
- les éléments graphiques actifs comprennent une pluralité de flux de données respectivement fournis par l'un des mobiles et simultanément affichés via le dispositif d'affichage, chaque mobile contrôlé par le système de contrôle fournissant au moins un flux de données, les premiers modes de fonctionnement correspondant aux flux de données permettant à l'opérateur d'interagir avec les flux de données et au moins le mobile fournissant le flux de données correspondant selon un premier ensemble de fonctionnalités ;
- l'agencement relatif des flux de données sur le dispositif d'affichage est utilisé, en complément de la position du regard de l'opérateur détectée par le dispositif de pointage, comme donnée d'entrée d'une ou plusieurs fonctionnalités d'au moins un ensemble de fonctionnalités associé à un élément graphique actif ;
- le premier ensemble de fonctionnalités comprend un ou plusieurs éléments du groupe formé par : une fonction de modification de l'agencement relatif des flux de données sur le dispositif d'affichage, une fonction de modification de l'orientation et/ou des paramètres d'un capteur embarqué à bord d'un mobile, une fonction de basculement entre deux modes de fonctionnement de l'un des mobiles ;
- l'interface de commande comprend une surface tactile ;
- l'interface de commande comprend une tablette d'affichage tactile configurée pour l'affichage d'informations relatives aux mobiles ;
- tout ou partie des fonctionnalités des premiers modes de fonctionnement du système de contrôle sont déclenchées par la réalisation via la surface tactile d'un geste ou d'une séquence de gestes du groupe formé par : la mise en contact d'un ou plusieurs doigts avec la surface tactile, le déplacement d'un doigt sensiblement selon une direction sur la surface tactile, le déplacement conjoint de plusieurs doigts sensiblement selon une direction sur la surface tactile, le déplacement de deux ou plus de doigts les uns relativement aux autres sur la surface tactile, le tapotement successif d'un ou plusieurs doigts sur la surface tactile ;
- le système de contrôle est configuré pour activer un deuxième mode de fonctionnement en réponse à la détection d'une direction pointée par l'opérateur, autre que la direction du dispositif d'affichage et dans lequel l'opérateur interagit avec un ou plusieurs mobiles via l'interface de commande ;
- le deuxième mode de fonctionnement est configuré pour l'interaction de l'opérateur avec un ou plusieurs mobiles selon un deuxième ensemble de fonctionnalités, le deuxième ensemble de fonctionnalités comprenant au moins une fonctionnalité différente des fonctionnalités des ensembles de fonctionnalités des premiers modes de fonctionnement du système de contrôle; et
- le système de contrôle est configuré pour modifier l'apparence d'un ou plusieurs éléments graphiques en réponse à la détection d'une direction pointée par l'opérateur, correspondant au ou aux éléments graphiques, et pour modifier l'apparence de l'interface de commande en réponse à la détection d'une direction pointée par l'opérateur, autre que la direction d'un élément graphique actif.

L'invention concerne, en outre, un ensemble comprenant une pluralité de mobiles autonomes sans pilote et un système de contrôle des mobiles, le système étant tel que décrit ci-dessus et propre à contrôler la pluralité de mobiles de l'ensemble.

L'invention sera mieux comprise et d'autres avantages de l'invention apparaîtront plus clairement à la lecture de la description détaillée qui va suivre, donnée uniquement à titre d'exemple non limitatif et faite en référence aux figures annexées sur lesquelles :
- la figure 1 est une représentation schématique d'un exemple de système ou poste de contrôle conforme à l'invention ;
- la figure 2 est une représentation schématique d'un élément de traitement du système de la figure 1 ; et
- la figure 3 est un organigramme d'un exemple de procédé de contrôle conforme à l'invention.

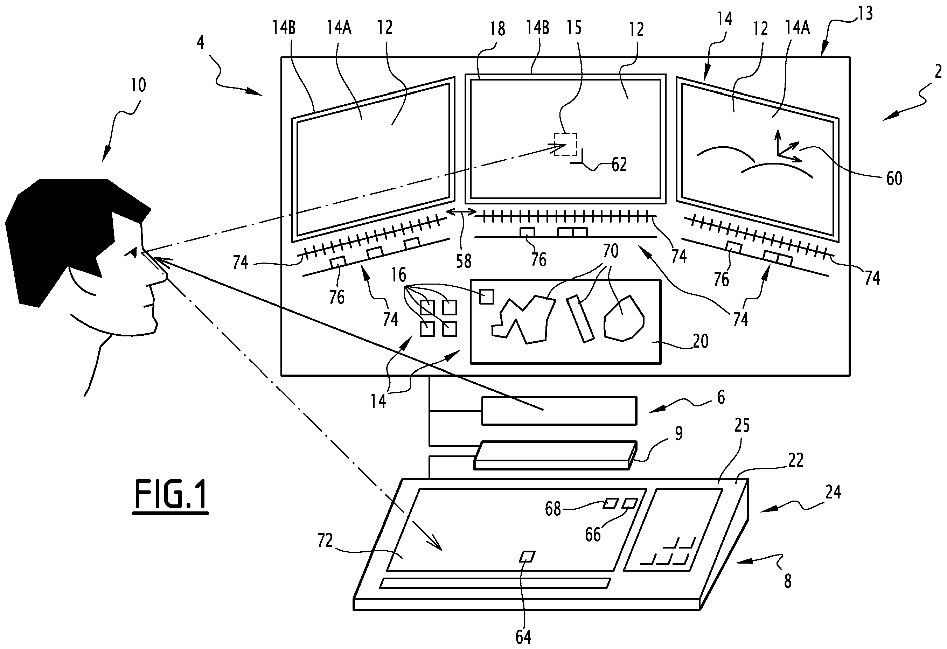

Le système 2 illustré à la figure 1 comprend un dispositif d'affichage 4, ci-après dispositif 4, un dispositif de pointage 6, correspondant par exemple à un oculomètre 6, ainsi qu'une interface de commande 8. En outre, le système 2 comprend un élément de traitement 9. Le système 2 est manipulé par un opérateur 10.

Le système 2 permet à l'opérateur 10 d'interagir avec une flotte de mobiles autonomes sans pilotes, non représentés, à chacun desquels est associé au moins un flux de données 12.

Chaque flux de données 12 est, par exemple, issu d'une caméra embarquée à bord du mobile et a vocation à permettre la visualisation sur le dispositif 4 d'une zone surveillée par le mobile.

Les mobiles sont propres à être de types différents, et chaque mobile est choisi parmi le groupe formé par : un mobile aéroporté, par exemple à voilure tournante ou à voilure fixe, un mobile terrestre et un mobile sous-marin.

Par exemple, le système 2 permet le contrôle simultané de deux mobiles, trois mobiles ou plus de trois mobiles.

Le dispositif 4 est configuré pour réaliser l'affichage d'éléments graphiques 14.

Les éléments graphiques 14 correspondent aux objets générés par le système 2 et affichés sur le dispositif 4 lors du fonctionnement du système 2.

Les éléments graphiques 14 renseignent l'opérateur 10 sur les mobiles et/ou le système 2. Les éléments graphiques 14 comprennent des éléments graphiques actifs 14A configurés pour également permettre à l'opérateur d'interagir avec le système 2 et/ou les mobiles via des fonctionnalités déclenchables par l'opérateur 10 par l'intermédiaire de l'interface de commande 8. Les éléments graphiques 14 comprennent également des éléments graphiques passifs 14B qui ne sont pas configurés pour l'interaction de l'opérateur avec le système 2 ou les mobiles.

Les éléments graphiques actifs 14A comprennent les flux de données 12 fournis par les mobiles contrôlés par le système 2. Le dispositif 4 est configuré pour afficher simultanément les flux de données 12.

Dans certains modes de réalisation, les éléments graphiques actifs 14A comprennent également un ou plusieurs symboles 15 en surimpression sur le flux de données 12 correspondant. Un symbole 15 est associé à certains points remarquables des images du flux de données, tels que par exemple une cible que le mobile correspondant a vocation à détecter. Un symbole 15 du flux de données 12 se présente par exemple sous la forme d'un cadre en trait plein ou pointillé. Le symbole 15 est généré par le mobile lui-même lors de la capture des images, ou encore par le système 2 une fois le flux de données 12 reçu.

Les éléments graphiques actifs 14A comprennent également des boutons 16 virtuels.

Les éléments graphiques passifs 14B comprennent des contours 18 respectivement associés à un flux de données 12 et qui en délimitent le bord. En outre, les éléments graphiques passifs 14B comprennent une carte de navigation 20. La carte de navigation 20 renseigne l'opérateur 10 sur l'emplacement des mobiles contrôlés par le système 2.

Dans certains modes de réalisation, au moins un élément graphique actif 14A est affiché en surimpression sur un élément graphique passif 14B.

Par exemple, un bouton 16 est affiché en surimpression sur la carte de navigation 20.

Le dispositif 4 comprend un écran d'affichage 13. En variante, le dispositif 4 comprend au moins deux écrans d'affichage 13 entre lesquels les flux de données 12 sont répartis.

Le dispositif de pointage 6 est configuré pour détecter une direction pointée par l'opérateur, c'est-à-dire, par exemple, une direction du regard de l'opérateur 10. Plus précisément, le dispositif de pointage 6 est configuré pour détecter que le regard de l'opérateur 10 porte ou non sur le dispositif 4. Le dispositif de pointage 6 est en outre configuré pour détecter l'élément graphique 14 sur lequel porte le regard de l'opérateur 10 lorsque celui-ci regarde le dispositif 4.

L'interface de commande 8 est configurée pour permettre à l'opérateur 10 de saisir des commandes pour interagir avec le système 2. Plus spécifiquement, l'interface de commande 8 est configurée pour permettre des interactions avec les éléments graphiques actifs 14A.

Préférentiellement, l'interface de commande 8 comprend une surface tactile 22.

Avantageusement, en référence à la Figure 1, l'interface de commande 8 comprend une tablette 24 d'affichage pourvue d'une surface tactile 22.

Par exemple, la tablette 24 présente une face supérieure 25 qui correspond à la surface tactile 22 et est simultanément configurée pour réaliser l'affichage d'informations relatives aux mobiles ou au fonctionnement du système 2.

De tels modes de réalisation permettent de minimiser le nombre d'équipements du système 2 et donc le coût et l'ergonomie du système 2.

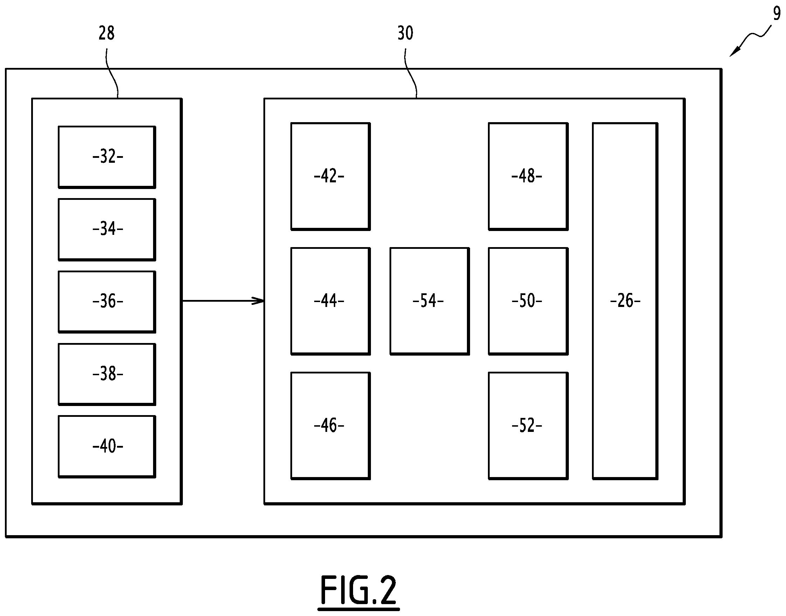

L'élément de traitement 9 est raccordé au dispositif d'affichage 4, au dispositif de pointage 6 et à l'interface de commande 8. L'élément de traitement 9 est configuré pour prendre en charge le fonctionnement du dispositif d'affichage 4, du dispositif de pointage 6 et de l'interface de commande 8. Par exemple, comme illustré à la figure 2, l'élément de traitement 9 comprend un dispositif informatique comportant un processeur 26, une première mémoire 28, propre à mémoriser des données spécifiques au fonctionnement du système 2 et notamment, au fonctionnement d'instructions de code de programmation et une deuxième mémoire 30 mémorisant les instructions de code de programmation.

L'exécution des instructions de code de programmation par le processeur 26, permet le fonctionnement du système 2 dans son ensemble.

La première mémoire 28 comprend un premier organe 32 de mémorisation de paramètres d'entrée propres à chaque mobile, un deuxième organe 34 de mémorisation d'objectifs à remplir par les mobiles, un troisième organe 36 de mémorisation d'un premier critère, un quatrième organe 38 de mémorisation d'un deuxième critère, et un cinquième organe 40 de mémorisation de paramètres propres à un environnement prédéterminé dans lequel évoluent les mobiles.

Les paramètres d'entrée correspondent à des données propres à chaque mobile et sont par exemple des données propres à une charge utile embarquée sur le mobile, ou aux capacités de déplacement du mobile, ou au type du mobile.

Les données propres à la charge comprennent par exemple le grossissement optique d'une caméra appartenant au mobile et/ou un identifiant de la caméra.

Les données propres aux capacités de déplacement du mobile comprennent par exemple une vitesse minimale, une vitesse maximale, des modèles de consommations de carburant, une altitude minimale, une altitude maximale, des capacités de déplacements en fonction de la direction du vent et/ou une fenêtre d'autonomie.

Les données propres au type de mobile comprennent par exemple un identifiant du type du mobile, un identifiant du mobile et/ou les dimensions du mobile.

Les objectifs mémorisés par le deuxième organe de mémorisation 34 forment une mission à remplir par les mobiles. Chaque objectif comprend, par exemple, au moins la définition d'une zone à surveiller de l'environnement prédéterminé dans lequel sont destinés à évoluer les mobiles.

Le premier critère correspond, par exemple, à une donnée prise en compte par le processeur 26 lors de l'exécution des instructions de code de programmation. Plus précisément, le premier critère correspond à un critère à respecter en fonction duquel les instructions de code de programmation exécutées par le processeur 26 différeront. À titre d'exemple, le premier critère est pris en compte par minimisation d'une fonction de coût. Le premier critère est, par exemple, un temps maximal pour la durée de réalisation d'un objectif donné ou une prise de risque minimale.

Le deuxième critère correspond également à une donnée prise en compte par le processeur 26 lors de l'exécution des instructions de code de programmation. Plus précisément, le deuxième critère correspond à un critère à respecter en fonction duquel les instructions de code de programmation exécutées par le processeur 26 différeront. À titre d'exemple, le deuxième critère est pris en compte par minimisation d'une fonction de coût. Le deuxième critère est, par exemple, une distance maximale à parcourir par les mobiles à ne pas dépasser pour la réalisation de la mission ou une consommation de carburant minimale.

Les paramètres propres à l'environnement correspondent à des données définissant l'environnement dans lequel les mobiles sont propres à évoluer. Les paramètres propres à l'environnement correspondent, par exemple, à des données climatiques ou à des données géographiques.

Les données géographiques correspondent par exemple à des zones interdites pour les mobiles, liées par exemple à l'existence d'une frontière entre deux pays.

Les données climatiques comportent par exemple des données relatives à la pluviométrie, au vent ou à la température de l'environnement du mobile.

La deuxième mémoire 30 mémorise des instructions de code de programmation 42 de détermination d'un ordre de réalisation des objectifs de la mission en fonction du deuxième critère. Les instructions de détermination 42 correspondent par exemple à différents algorithmes de détermination de l'ordre et le processeur 26 est propre à choisir l'algorithme à exécuter suivant le deuxième critère. À titre d'exemple, le deuxième critère est pris en compte par minimisation d'une fonction de coût. Plus précisément, si le deuxième critère est une distance maximale à parcourir par les mobiles à ne pas dépasser pour la réalisation de la mission, le processeur 26 est propre à exécuter l'algorithme permettant de minimiser la distance parcourue par les mobiles. La fonction de coût consiste à mesurer l'écart entre chaque algorithme de détermination possible et un algorithme de détermination idéal qui respecterait le deuxième critère.

La deuxième mémoire 30 mémorise des instructions de code de programmation 44 de décomposition, selon le premier critère, de chaque objectif mémorisé par le deuxième organe de mémorisation 34, en plusieurs tâches optimales en fonction des paramètres d'entrée mémorisés par le premier organe de mémorisation 32, des paramètres propres à l'environnement et de l'ordre déterminé en réponse à l'exécution des instructions de détermination 42. Chaque tâche optimale est associée à un mobile différent. De plus, chaque tâche optimale correspond notamment à une trajectoire à suivre par le mobile auquel la tâche est associée.

Comme présenté précédemment pour les instructions de détermination 42, les instructions de décomposition 44 correspondent par exemple à différents algorithmes de décomposition de chaque objectif en plusieurs tâches optimales. Le processeur 26 est alors propre à choisir l'algorithme de décomposition à exécuter suivant le premier critère. À titre d'exemple, le premier critère est pris en compte par minimisation d'une fonction de coût. Plus précisément, si le premier critère est une durée maximale de réalisation d'un objectif donné, le processeur 26 est propre à exécuter l'algorithme de décomposition permettant de minimiser la durée de réalisation par les mobiles de l'objectif donné. La fonction de coût consiste à mesurer l'écart entre chaque algorithme de décomposition possible et un algorithme de décomposition idéal qui respecterait le premier critère.

La deuxième mémoire 30 mémorise également des instructions de code de programmation 46 d'affectation à chaque mobile des tâches optimales auxquelles le mobile est associé suivant l'ordre déterminé en réponse à l'exécution des instructions de détermination 42. La ou les tâches optimales affectées à chaque mobile en réponse à l'exécution des instructions d'affectation 46 correspondent à une trajectoire globale à suivre par le mobile, chaque trajectoire globale étant une juxtaposition des tâches affectées au mobile et associées à chaque objectif de la mission.

La deuxième mémoire 30 comprend, en outre, des instructions de code de programmation 48 de repérage d'une modification d'au moins l'un des paramètres d'entrée et/ou du premier critère et/ou du deuxième critère lors de la réalisation de la mission, ainsi des instructions de code de programmation 50 de calcul, pour chaque mobile, d'une nouvelle trajectoire globale à suivre lorsque la modification est repérée. Le processeur 26 est apte à exécuter les instructions de calcul 50 pour calculer chaque nouvelle trajectoire globale en fonction des trajectoires globales affectées aux mobiles précédemment au repérage de la modification des paramètres d'entrée et de parties des trajectoires globales déjà effectuées par les mobiles précédemment au repérage de ladite modification.

Par ailleurs, le processeur 26 est apte via l'exécution des instructions d'affectation 46 à affecter chaque nouvelle trajectoire globale calculée via les instructions de calcul 50 au mobile associé.

La modification des paramètres d'entrée correspond, par exemple, au retrait dans les paramètres d'entrée de l'identifiant de l'un des mobiles.

Avantageusement, le deuxième organe de mémorisation 34 mémorise, en outre, des instructions de code de programmation 52 de calcul de la ou les distances entre chaque zone à surveiller de l'environnement prédéterminé définie dans chaque objectif de la mission. Le processeur 26 est alors apte via l'exécution des instructions de détermination 42 à déterminer l'ordre de réalisation des objectifs notamment en fonction de la ou des distances. La ou les distances correspondent soit à une ou des distances géométriques, soit à une ou des distances calculées dans un espace relatif, par exemple, au deuxième critère.

En variante, la ou les distances correspondent à des trajets calculés entre chaque zone à surveiller de l'environnement prédéterminé.

Avantageusement encore, le deuxième organe de mémorisation 30 mémorise des instructions de code de programmation 54 d'évaluation d'un indicateur représentatif d'un taux de conformité à la mission et/ou au premier critère et/ou au deuxième critère. Le processeur 26 est adapté, via l'exécution des instructions d'évaluation 54, pour calculer l'indicateur notamment en fonction des trajectoires globales destinées à être affectées à chaque mobile. L'indicateur correspond par exemple à l'écart mesuré entre chaque algorithme de détermination 42 possible et un algorithme de détermination idéal qui respecterait le deuxième critère.

Les instructions de code de programmation mémorisées par la deuxième mémoire 30 forment un programme d'ordinateur apte à être exécuté ou mis en œuvre par un ordinateur. L'ordinateur correspond, par exemple, au processeur 26.

L'élément de traitement 9 est configuré pour sélectivement activer l'un d'une pluralité de premiers modes de fonctionnement du système 2 respectivement associés à un élément graphique actif 14A en réponse à la détection, par le dispositif de pointage 6, du regard de l'opérateur sur l'élément graphique actif 14A correspondant.

À chaque premier mode de fonctionnement du système 2 est associé un ensemble de fonctionnalités via lesquelles l'opérateur interagit avec un ou plusieurs éléments graphiques 14 et/ou un ou plusieurs mobiles et modifie, par exemple, les paramètres d'entrée et/ou le premier critère et/ou les objectifs, et/ou le deuxième critère.

En particulier, l'élément de traitement 9 est configuré pour sélectivement activer l'un d'une pluralité de premiers modes de fonctionnement respectivement associés à l'un des flux de données 12 affichés sur le dispositif 4 pour l'interaction de l'opérateur 10 avec les flux de données 12 et au moins le mobile fournissant le flux de données 12 correspondant. Chacun des modes de fonctionnement est déclenché en réponse à la détection du regard de l'opérateur sur le flux de données 12 correspondant.

Par exemple, les premiers modes de fonctionnement associés aux flux de données 12 sont tous associés à un premier ensemble de fonctionnalités.

Le premier ensemble de fonctionnalités comprend un ou plusieurs des éléments du groupe formé par : une fonction de modification de l'agencement relatif des flux de données 12 (symbolisée par une flèche 58 sur la figure 1), une fonction de modification de l'orientation et/ou du niveau de grossissement d'un flux de données 12 (symbolisée par un repère 60 sur la figure 1), une fonction de basculement entre deux modes de fonctionnement d'un mobile dont le flux de données 12 est visualisable sur le dispositif 4 (représentée par un symbole 62 sur la figure 1). Ainsi les fonctions de modification et de basculement présentées ci-dessus sont, par exemple, réalisées via la modification des paramètres d'entrée et/ou du premier critère et/ou des objectifs et/ou du deuxième critère. La modification des paramètres d'entrée et/ou du premier critère et/ou des objectifs et/ou du deuxième critère implique un nouveau calcul des tâches affectées aux mobiles et, par exemple, des trajectoires globales affectées aux mobiles.

La fonction de basculement correspond, par exemple, au passage du mobile d'un état de participation à la mission à un état d'arrêt de participation à la mission.

En variante, la fonction de basculement entre deux modes de fonctionnement d'un mobile permet à l'opérateur de faire basculer un mobile contrôlé par le système 2 entre un mode de fonctionnement dans lequel le mobile a vocation à détecter les cibles dans le champ d'observation de la ou des caméras à son bord, et un mode de fonctionnement dans lequel le mobile est verrouillé sur une ou plusieurs cibles préalablement détectées. Le mode de fonctionnement dans lequel le mobile est verrouillé a par exemple pour effet de faire en sorte que le champ d'observation de la ou chaque caméra du mobile demeure centré sur la ou les cibles en question au cours du temps.

Un premier mode de fonctionnement actif est désactivé en réponse à la détection du regard de l'opérateur dans une direction autre que celle de l'élément graphique actif 14A correspondant, ou à l'issue de l'exécution d'une fonctionnalité du premier mode de fonctionnement en question.

Une ou plusieurs des fonctionnalités des ensembles de fonctionnalités associés aux premiers modes de fonctionnements du système 2 sont déclenchées par la réalisation via la surface tactile 22 de l'interface de commande 8 d'un geste ou d'une séquence de gestes du groupe formé par : la mise en contact d'un ou plusieurs doigts avec la surface tactile, le déplacement d'un doigt de l'opérateur 10 sensiblement selon une direction sur la surface tactile 22, le déplacement conjoint de plusieurs doigts sensiblement selon une direction sur la surface tactile 22, le tapotement successif d'un ou plusieurs doigts sur la surface tactile 22, le déplacement de deux ou plus de doigts de l'opérateur les uns relativement aux autres sur la surface tactile 22.

À noter que les fonctionnalités associées aux premiers modes de fonctionnement sont déclenchées par la réalisation simultanée du ou des gestes correspondants via la surface tactile 22 et la fixation du regard de l'opérateur sur l'élément graphique actif 14A associé au premier mode de fonctionnement correspondant au moins au commencement de la réalisation du geste ou du premier des gestes correspondants.

Dans certains modes de réalisation, l'agencement relatif des flux de données 12 sur le dispositif 4 est utilisé comme donnée d'entrée d'une ou plusieurs fonctionnalités associées à un ou plusieurs éléments graphiques actifs 14A en complément de la position du regard de l'opérateur détectée par le dispositif de pointage 6. Par exemple, dans le cas d'une juxtaposition de flux de données 12, l'exécution d'une fonctionnalité donnée relative à un élément graphique actif 14A déclenche une action impactant un flux de données 12 situé à emplacement prédéterminé dans la juxtaposition, par exemple le flux de données 12 central pour un nombre impair de flux de données 12, et/ou impactant le mobile fournissant le flux de données correspondant et donc les paramètres d'entrée et/ou le premier critère et/ou les objectifs, et/ou le deuxième critère. Ceci permet de simplifier le traitement réalisé par l'élément de traitement 9 et l'ergonomie du système 2 pour la réalisation de fonctionnalités associées à un élément graphique 14 autre qu'un flux de données mais impactant néanmoins un mobile ou un flux de données 12 donné.

En outre, la fonction de modification de l'orientation et/ou du niveau de grossissement d'un flux de données 12 permet à l'opérateur de déplacer le champ de vision d'une caméra embarquée à bord du mobile et d'en modifier le niveau de grossissement, et donc de modifier le contenu des images du ou des flux de données 12 émis par le mobile associé et affiché(s) sur le dispositif 4.

En outre, l'élément de traitement 9 est configuré pour activer un deuxième mode de fonctionnement du système 2 en réponse à la détection du regard de l'opérateur 10 dans une direction autre que celle du dispositif 4. Dans le deuxième mode de fonctionnement, l'opérateur interagit avec un ou plusieurs des mobiles contrôlés par le système 2 via l'interface de commande 8.

L'interaction de l'opérateur 10 avec le ou les mobiles dans le deuxième mode de fonctionnement est réalisée selon un deuxième ensemble de fonctionnalités. Préférentiellement, le deuxième ensemble de fonctionnalités comprend au moins une fonctionnalité différente des fonctionnalités des ensembles de fonctionnalités associés aux premiers modes de fonctionnement du système 2. Ceci a pour effet d'accroître le nombre des fonctionnalités accessibles par l'opérateur 10 via le système 2 tout en ne requérant pas l'adjonction d'éléments supplémentaires, par exemple au niveau de l'interface de commande 8.

Par exemple, comme pour le premier ensemble de fonctionnalités, une ou plusieurs des fonctionnalités du deuxième ensemble de fonctionnalités sont déclenchées par la réalisation via la surface tactile 22 d'un geste ou d'une séquence de gestes du groupe précédemment décrit. La réalisation des gestes précédemment décrits implique, par exemple, la modification des paramètres d'entrée et/ou du premier critère et/ou des objectifs, et/ou du deuxième critère.

Par exemple, le deuxième ensemble de fonctionnalités comprend une fonction d'importation d'un mobile en vue du contrôle du mobile par le système 2, ou encore d'exportation d'un mobile contrôlé par le système 2 vers un autre système en vue du contrôle du mobile par ce dernier. Les fonctions d'importation et d'exportation correspondent respectivement au passage d'un mobile d'un état de participation à la mission à un état d'arrêt de participation à la mission ou l'inverse.

Par exemple, pour l'exportation d'un mobile, l'opérateur 10 effectue, sur la surface tactile 22, un geste de glisser-déposer d'une icône 64 (visualisable sur la face supérieure 25 de la tablette 24) associée au mobile à exporter vers une icône d'exportation 66. Pour l'importation d'un mobile, l'opérateur clique sur une icône 68 prévue sur l'interface de commande 8. La réalisation du geste de glisser-déposer de l'icône 64 entraîne l'importation dans les paramètres d'entrée de l'identifiant du mobile. La réalisation du clique sur l'icône 68 entraîne la suppression dans les paramètres d'entrée de l'identifiant du mobile

En variante, l'une ou les deux fonctions d'importation et d'exportation sont alternativement ou également associées aux premiers modes de fonctionnement.

Par ailleurs, par exemple, le deuxième ensemble de fonctionnalités comprend une fonction de contrôle individuel et collectif de la navigation des mobiles contrôlés par le système 2. Le deuxième ensemble de fonctionnalités est également adapté pour comprendre une fonction d'exportation d'un flux de données 12 vers un autre système de contrôle.

En outre, l'élément de traitement 9 est configuré pour modifier l'apparence de tout ou partie des éléments graphiques 14 affichés sur le dispositif 4 et des éléments affichés sur la tablette 24 en réponse à la détection de la direction du regard de l'opérateur 10 ou en réponse à l'exécution d'une fonctionnalité. En particulier, l'élément de traitement 9 est configuré pour modifier l'apparence de tout ou partie des éléments graphiques actifs 14A et de tout ou partie des éléments graphiques passifs 14B.

Par exemple, l'élément de traitement 9 est configuré pour modifier la couleur et/ou l'épaisseur du contour 18 d'un flux de données 12 en réponse à la détection du regard de l'opérateur dans la direction du flux de données 12 en question. Par exemple, le contour 18 voit son épaisseur augmentée, et passe d'une couleur orangée à une couleur bleue. En outre, par exemple, l'élément de traitement 9 modifie l'épaisseur et/ou la couleur d'un élément graphique 14, tel que par exemple un symbole 15, lorsque l'élément graphique 14 en question est regardé par l'opérateur 10. Par exemple, le symbole 15 voit son épaisseur et/ou la nature de son trait modifiée lorsque l'opérateur réalise une commande de basculement d'un mode de fonctionnement du mobile associé vers un autre mode de fonctionnement

Dans certains modes de réalisation, l'élément de traitement 9 modifie également l'éclairage du dispositif 4 en réponse à la détection du regard de l'opérateur en direction du dispositif 4. En outre, le rétro-éclairage de la tablette 24 est également modifié en réponse à la détection du regard de l'opérateur dans une direction autre que celle du dispositif 4.

Dans certains modes de réalisation, l'élément de traitement 9 est également configuré pour modifier l'apparence d'un élément graphique actif 14A figurant sur un flux de données 12 en réponse à la réalisation par l'opérateur d'une ou plusieurs fonctionnalités impliquant l'élément graphique actif 14A en question.

Lors du fonctionnement du système 2 selon l'invention, l'opérateur 10 active l'un des premiers modes de fonctionnement en regardant un élément graphique actif 14A. Le premier mode de fonctionnement déclenché demeure actif tant que l'opérateur 10 maintient son regard en direction de l'élément graphique actif 14A en question ou tant que l'opérateur ne déclenche pas l'exécution d'une fonctionnalité associée.

L'opérateur 10 est alors propre à interagir avec les éléments graphiques actifs 14A, notamment les flux de données 12, pour interagir avec le système 2 et/ou les mobiles contrôlés par le système 2. Pour ce faire, l'opérateur 10 exécute des fonctionnalités associées au premier mode de fonctionnement via l'interface de commande 8. Les fonctionnalités du premier mode de fonctionnement sont déclenchées par un ou plusieurs des gestes de l'ensemble décrit ci-dessus. Le regard de l'opérateur 10 et les fonctionnalités dont l'opérateur 10 commande l'exécution modifient l'apparence d'un ou plusieurs éléments graphiques 14, et dans certains cas, les paramètres d'entrée et/ou le premier critère et/ou les objectifs, et/ou le deuxième critère.

A l'inverse, l'opérateur 10 déclenche le deuxième mode de fonctionnement du système 2 dès lors que son regard ne porte pas sur le dispositif 4. Le deuxième mode de fonctionnement demeure actif tant que l'opérateur 10 ne porte pas son regard sur un élément graphique actif 14A du dispositif 4 auquel cas le premier mode de fonctionnement associé est activé. L'apparence, par exemple le rétroéclairage, de la surface supérieure de la tablette 24 est modifiée en réponse au déclenchement du deuxième mode de fonctionnement. L'opérateur 10 interagit avec le ou les mobiles via le deuxième ensemble de fonctionnalités, qui sont respectivement déclenchées en réponse à la réalisation d'un ou plusieurs gestes du groupe précédemment décrit via la surface tactile 22.

Dans certains modes de réalisation, les éléments graphiques actifs 14A comprennent, pour chaque mobile contrôlé par le système 2, un plan de navigation 70 en surimpression sur la carte 20. Le plan de navigation 70 se présente par exemple sous la forme d'un tracé sur la carte 20.

En outre, la tablette 24 est configurée pour l'affichage d'une carte géographique 72. Par exemple, la carte 20 est une sous partie de la carte géographique 72 et est centrée sur le mobile associé à un flux de données donné.

Les fonctionnalités associées au premier mode de fonctionnement relatif à un plan de navigation 70 comprennent des fonctionnalités de modification du plan de navigation 70. Par exemple, l'une des fonctionnalités associées au premier mode de fonctionnement est mise en œuvre par la sélection tactile par l'opérateur d'un ou plusieurs emplacements de la carte géographique 72. Les emplacements de la carte géographique 72 seront alors intégrés au plan de navigation 70 correspondant.

Dans certains modes de réalisation, les éléments graphiques actifs 14A comprennent des barres ou échelles temporelles 74 respectivement associées à l'un des flux de données 12 et sur lesquelles ou en regard desquelles figurent des évènements 76 associés au fonctionnement du mobile correspondant. Les évènements 76 correspondent, par exemple, à des éléments indicateurs 76, du ou des objectifs réalisés par chaque mobile au cours du temps et sont associés à chaque échelle temporelle 74.

En variante, les évènements 76 sont par exemple représentatifs de la détection par le mobile correspondant d'une cible dans son champ d'observation, de l'instant de basculement entre des modes de fonctionnement sous l'action de l'opérateur 10, etc.

Une fonctionnalité associée à un évènement 76 est par exemple l'affichage sur le flux de données 12, par exemple en incrustation ou en médaillon, des images du flux de données 12 à l'instant correspondant, ou encore le déplacement sur la barre temporelle 74 d'un évènement 76.

Dans certains modes de réalisation, l'élément de traitement 9 est configuré pour déclencher un troisième mode de fonctionnement du système 2 en réponse à la détection simultanée:
- du regard de l'opérateur dans la direction du dispositif 4, et
- du fait qu'aucun premier mode de fonctionnement n'est actif.

Dans le troisième mode de fonctionnement du système 2, aucune des fonctionnalités des premiers modes de fonctionnement et du deuxième mode de fonctionnement n'est déclenchable, en particulier par l'interface de commande 8.

En pratique, le troisième mode de fonctionnement correspond à un mode de fonctionnement transitoire entre deux premiers modes de fonctionnement du système 2 ou entre un premier mode de fonctionnement et le deuxième mode de fonctionnement du système 2.

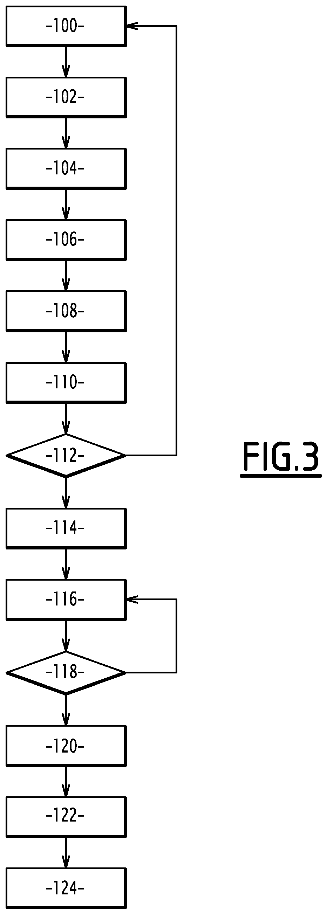

Un quatrième mode de fonctionnement du système de contrôle 2 va par la suite être expliqué, grâce à la présentation du procédé de contrôle des mobiles autonomes sans pilote illustré à la figure 3.

Lors d'une étape initiale de fourniture 100 l'opérateur fournit, via par exemple la réalisation sur la surface tactile 22 de l'interface de commande 8 d'un geste ou d'une séquence de gestes et/ou la fixation du regard de l'opérateur sur les éléments graphiques actifs 14A, à la première mémoire 28 et au premier organe de mémorisation 32, des paramètres d'entrée propres à chaque mobile. Le premier organe de mémorisation 32 mémorise alors les paramètres d'entrée fournis.

Lors d'une étape de fourniture 102, l'opérateur fournit à la première mémoire 28 et, plus précisément, au deuxième organe de mémorisation 34 des objectifs à remplir formant la mission. L'opérateur fournit les objectifs à remplir via par exemple la réalisation sur la surface tactile 22 de l'interface de commande 8 d'un geste ou d'une séquence de gestes. Le deuxième organe de mémorisation 34 mémorise alors les objectifs.

Avantageusement, lors de l'étape de fourniture 102, chaque objectif fourni à la première mémoire 28, comprend au moins la définition d'une zone à surveiller de l'environnement prédéterminé.

Lors d'une étape de fourniture 104, l'opérateur fournit, respectivement au troisième 36 et au quatrième 38 organe de mémorisation, via par exemple la réalisation sur la surface tactile 22 de l'interface de commande 8 d'un geste ou d'une séquence de gestes, le premier critère et le deuxième critère. Les troisième 36 et quatrième 38 organes de mémorisation mémorisent alors le premier critère et respectivement le deuxième critère.

Avantageusement, lors de l'étape 104, le deuxième critère fourni correspond à une distance maximale à parcourir par les mobiles à ne pas dépasser.

Ensuite, au cours d'une étape de fourniture 106 l'opérateur fournit, au cinquième organe de mémorisation 40, via par exemple la réalisation sur la surface tactile 22 de l'interface de commande 8 d'un geste ou d'une séquence de gestes, les paramètres propres à l'environnement prédéterminé dans lequel évoluent les mobiles. Le cinquième organe de mémorisation 40 mémorise alors les paramètres propres à l'environnement.

Lors d'une étape de détermination 108 suivante, le processeur 26 exécute les instructions de détermination 42 et un ordre de réalisation des objectifs de la mission est déterminé en fonction du deuxième critère. L'exécution des instructions de détermination 42 est, par exemple, commandée par l'opérateur via l'interface de commande 8. Comme présenté précédemment, le processeur 26 sélectionne par exemple, parmi les instructions de détermination 42, l'algorithme de détermination à exécuter suivant le deuxième critère. À titre d'exemple, le deuxième critère est pris en compte par minimisation d'une fonction de coût. Plus précisément, si le deuxième critère est une distance maximale à parcourir par les mobiles à ne pas dépasser pour la réalisation de la mission, le processeur 26 exécute l'algorithme de détermination qui permet de minimiser la distance parcourue par les mobiles. La fonction de coût consiste à mesurer l'écart entre chaque algorithme de détermination possible et un algorithme idéal qui respecterait le deuxième critère. En complément, l'écart qui présente la plus faible valeur est, par exemple, transmis via le dispositif d'affichage 4 à l'opérateur 10. L'opérateur 10 détermine alors en fonction de l'écart, si la conformité au deuxième critère de l'algorithme de détermination sélectionné est suffisante. Plus précisément, l'opérateur est apte à commander le retour à l'étape de fourniture 100 s'il évalue que la conformité au deuxième critère est insuffisante ou la poursuite du procédé de contrôle s'il évalue que la conformité au deuxième critère est suffisante. L'ordre de réalisation des objectifs de la mission est ainsi obtenu.

Avantageusement, lors de l'étape de détermination 108, la ou les distances entre chaque zone à surveiller de l'environnement prédéterminé sont calculées, et l'ordre est déterminé notamment en fonction de la ou des distances.

La ou les distances correspondent soit à une ou des distances géométriques, soit à une ou des distances calculées dans un espace relatif, par exemple, au deuxième critère. La ou les distances correspondent, par exemple, à un temps.

Puis, lors d'une étape de décomposition 110, une fois que l'étape de détermination 108 est terminée, l'élément de traitement 9 effectue une décomposition selon le premier critère, des objectifs en plusieurs tâches optimales en fonction des paramètres d'entrée, des paramètres propres à l'environnement prédéterminé et de l'ordre déterminé à l'étape de détermination 108. Le processeur 26 utilise les paramètres d'entrée mémorisés lors de l'étape de fourniture 100, les paramètres propres à l'environnement prédéterminé mémorisés lors de l'étape 106 et l'ordre déterminé à l'étape de détermination 108 pour exécuter les instructions de décomposition 44. Comme présenté précédemment, le processeur 26 sélectionne, par exemple, parmi les instructions de décomposition 44, l'algorithme de décomposition à exécuter suivant le premier critère. À titre d'exemple, le premier critère est pris en compte par minimisation d'une fonction de coût. Plus précisément, si le premier critère est une durée maximale de réalisation d'un objectif donné, le processeur 26 exécute l'algorithme de décomposition qui permet de minimiser la durée de réalisation de l'objectif donné. La fonction de coût consiste à mesurer l'écart entre chaque algorithme de décomposition possible et un algorithme de décomposition idéal qui respecterait le premier critère. Lors de l'étape 110 de décomposition, chaque tâche optimale de chaque objectif est associée à un mobile différent. Ainsi à chaque tâche optimale est associé l'identifiant du mobile auquel la tâche est associée.

Au cours d'une étape de calcul 112, suite à l'étape 110, l'indicateur représentatif du taux de conformité à la mission et/ou au premier critère et/ou au deuxième critère est calculé par le processeur 26 qui exécute les instructions d'évaluation 54. Pour calculer l'indicateur, le processeur 26 mesure par exemple l'écart entre chaque algorithme de détermination 42 possible et un algorithme de détermination idéal qui respecterait le deuxième critère. L'indicateur est fonction des tâches optimales et plus précisément des trajectoires globales destinées à être affectées à chaque mobile. Suite à l'étape de calcul 112, l'opérateur 10 ou en variante l'élément de traitement 9 est apte à comparer la valeur de l'indicateur avec une valeur de seuil prédéterminé. Puis, l'opérateur 10 ou l'élément de traitement 9 commande, par exemple, soit le retour à l'étape 100 de fourniture si l'indicateur a une valeur inférieure au seuil prédéterminé, soit la réalisation d'une étape 114 d'affectation si l'indicateur a une valeur supérieure au seuil prédéterminé.

Lors de l'étape d'affectation 114, les tâches optimales obtenues à l'issue de l'étape de décomposition 110 sont affectées aux mobiles auxquelles elles sont associées, suivant l'ordre déterminé à l'étape de détermination 108. Un message de commande est alors transmis par l'élément de traitement 9 aux mobiles, pour que les mobiles réalisent les tâches optimales suivant l'ordre déterminé à l'étape de détermination 108. Pour chaque mobile, la juxtaposition des tâches affectées à l'un des mobiles correspond à une tâche globale à réaliser par le mobile afin que la mission soit réalisée par l'ensemble des mobiles.

Suite à l'étape d'affectation 114, chaque mobile effectue les tâches qui lui ont été affectées à l'étape d'affectation 114 et simultanément, de préférence, lors d'une première étape d'affichage 116, l'élément de traitement 9 affiche sur le dispositif d'affichage 4 le déplacement de chaque mobile et les flux de données 12 associés aux mobiles. L'élément de traitement 9 affiche, par exemple, sur le dispositif 4, les barres temporelles 74 et les évènements 76, c'est-à-dire que le ou les objectifs réalisés par chaque mobile au cours du temps, sont par exemple affichés. Pour réaliser un tel affichage, les mobiles communiquent, par exemple, régulièrement ou en continu leur position à l'élément de traitement 9.

Puis, l'élément de traitement 9 réalise suivant une période prédéterminée, par exemple égale à 1 seconde, une étape de repérage 118. Lors de l'étape de repérage 118, l'élément de traitement 9 exécute les instructions de repérage 48 et repère si une modification d'au moins l'un des paramètres d'entrée et/ou du premier critère et/ou du deuxième critère est réalisée, par exemple par l'opérateur, via des gestes sur le dispositif 4. Si lors de l'étape de repérage 118, aucune modification n'est repérée, l'étape d'affichage 116 est réitérée.

Si lors de l'étape 118, une modification est repérée, la modification correspondant par exemple, au passage d'un mobile de l'état de participation à la mission à l'état d'arrêt de participation à la mission, alors, au cours d'une étape de calcul 120, l'élément de traitement 9 exécute les instructions de calcul 50 et calcule, pour chaque mobile dans l'état de participation à la mission, une nouvelle trajectoire globale à suivre. La nouvelle trajectoire globale est calculée en fonction des trajectoires globales affectées aux mobiles précédemment au repérage de la modification et de parties des trajectoires globales déjà effectuées par les mobiles précédemment à la modification. Afin de calculer les nouvelles trajectoires globales, le processeur 26 calcule par exemple des parties de trajectoires globales restant à effectuer par chaque mobile. Les parties de trajectoires globales restant à effectuer correspondent, par exemple, à une différence entre les trajectoires globales affectées aux mobiles précédemment au repérage de la modification et les parties des trajectoires globales déjà effectuées par les mobiles précédemment à la modification. Le processeur 26 détermine alors, par exemple, en fonction du nombre de mobiles en état de participation à la mission et des trajectoires globales restant à effectuer les nouvelles trajectoires globales.

Suite à l'étape de calcul 120, au cours d'une étape d'affectation 122, l'élément de traitement 9 affecte de manière analogue à ce qui a été présenté à l'étape d'affectation 114, chaque nouvelle trajectoire globale au mobile associé.

Ensuite, au cours d'une deuxième étape d'affichage 124, l'élément de traitement 9 affiche sur le dispositif 4 le déplacement de chaque mobile et les flux de données 12 associés aux mobiles, qui correspondent notamment aux nouvelles trajectoires globales affectées. La deuxième étape d'affichage 124 est similaire à l'étape d'affichage 116.

Avantageusement, au cours de la deuxième étape d'affichage 124, l'élément de traitement 9 réalise également durant une période prédéterminée, par exemple égale à 1 seconde, une étape similaire à l'étape de repérage 118.

En complément, suite à l'étape de décomposition 110, un niveau de grossissement optique d'une caméra est, par exemple, associé à chaque tâche optimale.

Le système 2 selon l'invention présente plusieurs avantages.

Tout d'abord, le système 2 permet de décomposer chaque objectif, selon le premier critère, en plusieurs tâches en fonction des paramètres d'entrée. Le contrôle des mobiles est ainsi simplifié, puisque le traitement des objectifs est réparti entre les mobiles et simplifié via la décomposition des objectifs en tâche. Le contrôle simplifié des mobiles permet notamment de réduire le nombre d'opérateurs impliqués dans le pilotage des mobiles et dans la gestion de la charge utile des mobiles.

En outre, le système 2 permet de simplifier la planification et l'allocation des tâches aux mobiles. La planification et l'allocation des tâches est, par exemple, simplifiée grâce au fait que, lors de l'étape de décomposition 110, chaque tâche optimale de chaque objectif est associée à un mobile différent ou encore que les tâches de chaque objectif sont partagées et réparties de manière optimale entre les mobiles.

Plus précisément, le système 2 permet d'améliorer la répartition des objectifs entre les mobiles afin que la réalisation des objectifs soit réalisée de manière optimale suivant le premier critère et/ou le deuxième critère, c'est-à-dire par exemple le plus rapidement possible. De plus, le système 2 permet à l'opérateur 10 de connaitre grâce à l'indicateur de conformité le degré de remplissage, c'est-à-dire de conformité, des trajectoires calculées par rapport à la mission et/ou au premier critère et/ou au deuxième critère.

Grâce au système 2 la mission à réaliser par les mobiles est, par exemple, exécutée rapidement, puisque l'ensemble des mobiles participe à la mission et que l'élément de traitement 9 est propre à déterminer un ordre de réalisation et/ou une répartition des objectifs de la mission selon un deuxième critère correspondant, par exemple, à une durée maximale de réalisation de la mission.

De plus, le système 2 est propre à recalculer les trajectoires globales affectées à chaque mobile lors d'une modification des paramètres d'entrée et/ou du premier critère et/ou du deuxième critère. Le système est donc apte à s'adapter rapidement et automatiquement à un changement de paramètres de la mission et, par exemple, à un changement des ressources disponibles pour réaliser la mission.

L'affichage simultané de flux de données 12 issus de différents mobiles sur le dispositif 4 permet le contrôle de plusieurs mobiles depuis un unique système 2. Le coût associé au contrôle d'une flotte de mobiles est donc réduit lorsque mis en œuvre par un système 2 selon l'invention.

Le recours à un dispositif de pointage 6 et notamment à un oculomètre permet par ailleurs d'enrichir le fonctionnement du système 2 tout en améliorant l'ergonomie du système 2 pour l'opérateur.

L'activation de l'un des premiers modes de fonctionnement en réponse à la détection du regard de l'opérateur en direction d'un élément graphique actif 14A permet de minimiser le nombre d'opérations nécessaires à l'opérateur pour interagir la pluralité de mobiles que le système 2 à vocation à contrôler. En conséquence, les traitements réalisés par l'élément de traitement 9 pour la réalisation des fonctions correspondantes sont simplifiés. En outre, ceci a pour effet que le système 2 présente une ergonomie améliorée pour l'opérateur.

La présence de la surface tactile 22 a également pour effet de minimiser le nombre d'équipements requis pour que l'opérateur puisse interagir avec le système 2. Le coût du système 2 est minimisé et l'ergonomie du système 2 est améliorée plus avant.

Par ailleurs, la tablette 24 permet également de minimiser le nombre d'équipements que le système 2 comprend.

En outre, les conditions de déclenchement du deuxième mode de fonctionnement du système 2 permettent de simplifier le fonctionnement du système 2. De même, l'ergonomie du système est améliorée pour l'opérateur 10, dans la mesure où le système 2, et en particulier le dispositif de pointage 6, présente un fonctionnement transparent pour ce dernier. En particulier, l'opérateur 10 n'a pas à modifier le comportement naturel de son regard pour manipuler le système 2.

Les fonctionnalités du premier ensemble de fonctionnalités permettent de rendre le système 2 adaptable à chaque opérateur, dans la mesure où l'opérateur a accès à des fonctions de modification de la disposition des flux de données 12 sur le dispositif 4. En outre, les traitements réalisés par l'élément de traitement 9 sont minimisés dans le cas d'une interaction de l'opérateur avec un flux de données 12, puisque le système 2 n'impose pas à l'opérateur d'interagir avec des commandes spécifiquement dédiées à l'orientation de la caméra embarquée à bord des mobiles, telles que par exemple un joystick physique dédié, ou encore un joystick virtuel situé au niveau de l'interface de commande 8. Ces avantages s'appliquent également à la fonctionnalité de basculement entre deux modes de fonctionnement d'un mobile.

Par ailleurs, les gestes permettant le déclenchement des fonctionnalités des ensembles de fonctionnalités sont simples à réaliser. Ils permettent à la fois d'améliorer l'ergonomie du système 2, mais aussi de simplifier le traitement réalisé par l'élément de traitement 9 pour la mise en œuvre du système 2.

Le contrôle des mobiles est ainsi amélioré et la charge cognitive qui en résulte pour l'opérateur réduite. Les mobiles sont ainsi contrôlés de manière plus efficace et sont apte à être contrôlés par un seul opérateur et non plusieurs.

Les modes de fonctionnement et modes de réalisations décrits ci-dessus sont aptes à être combinés les uns aux autres, totalement ou partiellement, pour donner lieu à d'autres modes de réalisation de l'invention.

## Revendications

1. Procédé de contrôle d'une pluralité de mobiles autonomes sans pilote, le procédé comportant les étapes suivantes :
- a) la fourniture (100) de paramètres d'entrée propres à chaque mobile,
- b) la fourniture (102) d'au moins deux objectifs à remplir par les mobiles, et
- c) la décomposition (110), selon au moins un premier critère, des objectifs en plusieurs tâches optimales en fonction des paramètres d'entrée, chaque tâche optimale de chaque objectif étant associée à un mobile différent, les objectifs fournis à l'étape de fourniture b) (102) formant une mission, et suite à l'étape de fourniture b) (102) et précédemment à l'étape de décomposition c) (110), le procédé comprenant l'étape suivante :
- b') la détermination (108) d'un ordre de réalisation des objectifs de la mission en fonction d'un deuxième critère,
**caractérisé en ce que**
l'étape de détermination comprend le choix et l'exécution d'un algorithme de détermination de l'ordre de réalisation des objectifs de la mission, l'algorithme étant choisi, en fonction du deuxième critère, parmi différents algorithmes de détermination de l'ordre mémorisés, et **en ce que**
l'étape de décomposition c) est réalisée en fonction de l'ordre.

2. Procédé selon la revendication 1, dans lequel chaque tâche optimale correspond à une trajectoire à suivre par le mobile auquel la tâche est associée.

3. Procédé selon la revendication 1 ou 2, dans lequel suite à l'étape de décomposition c) (110) le procédé comprend l'étape suivante :
- d) l'affectation (114) à chaque mobile de la ou des tâches optimales à laquelle ou auxquelles le mobile est associé suivant ledit ordre.

4. Procédé selon la revendication 3 dans sa dépendance avec la revendication 2, dans lequel la ou les tâches optimales affectées à chaque mobile lors de l'étape d'affectation d) correspondent à une trajectoire globale à suivre par le mobile, chaque trajectoire globale étant une juxtaposition des tâches affectées au mobile.

5. Procédé selon la revendication 4, dans lequel chaque mobile est adapté pour passer d'un état de participation à la mission à un état d'arrêt de participation à la mission et dans lequel suite à l'étape d'affectation d) (114) et précédemment à la fin de la réalisation de la mission par les mobiles, le procédé comprend l'étape suivante :
- e) la détection (118) du passage d'un ou plusieurs mobiles de l'état de participation à la mission à l'état d'arrêt de participation à la mission,
et dans lequel, si lors de l'étape de détection e) (118) ledit passage est détecté, le procédé comprend les étapes suivantes :
- f) le calcul (120), pour chaque mobile en état de participation à la mission, d'une nouvelle trajectoire globale à suivre, et
- g) l'affectation (122) de chaque nouvelle trajectoire globale au mobile associé.

6. Procédé selon la revendication 4, dans lequel suite à l'étape d'affectation d) (114) et précédemment à la fin de la réalisation de la mission par les mobiles, le procédé comprend l'étape suivante :
- e') le repérage (118) d'une modification d'au moins l'un des paramètres d'entrée et/ou du premier critère et/ou du deuxième critère,
et dans lequel, si lors de l'étape de repérage e') (118) ladite modification est repérée, le procédé comprend les étapes suivantes :
- f') le calcul (120), pour chaque mobile, d'une nouvelle trajectoire globale à suivre, et
- g') l'affectation (122) de chaque nouvelle trajectoire globale au mobile associé.

7. Programme d'ordinateur comportant des instructions de code de programmation aptes à être mises en œuvre par un ordinateur, dans lequel le programme est apte à mettre en œuvre le procédé selon l'une quelconque des revendications 1 à 6.

8. Système (2) de contrôle d'une pluralité de mobiles autonomes sans pilote, comprenant :
- un premier organe (32) de mémorisation de paramètres d'entrée propres à chaque mobile,
- un deuxième organe (34) de mémorisation d'au moins deux objectifs à remplir par les mobiles,
et un organe (44) de décomposition propre à décomposer, selon au moins un premier critère, chaque objectif en plusieurs tâches optimales en fonction des paramètres d'entrée, chaque tâche optimale de chaque objectif étant associée à un mobile différent, les objectifs mémorisés par le deuxième organe de mémorisation (34) formant une mission, le système comprenant un organe (42) de détermination de l'ordre de réalisation des objectifs de la mission en fonction d'un deuxième critère,
**caractérisé en ce que** le système comprend un troisième organe de mémorisation de différents algorithmes de détermination d'un ordre de réalisation des objectifs, l'organe de détermination étant propre à choisir et exécuter, un algorithme de détermination de l'ordre de réalisation des objectifs de la mission, l'algorithme étant choisi, en fonction du deuxième critère, parmi les différents algorithmes de détermination de l'ordre mémorisés et **en ce que** l'organe de décomposition (44) est propre à décomposer chaque objectif en plusieurs tâches optimales également en fonction de l'ordre déterminé par l'organe de détermination (42).

9. Système selon la revendication 8, dans lequel le système comprend en outre :
- un dispositif d'affichage (4) configuré pour l'affichage d'éléments graphiques (14), parmi lesquels des éléments graphiques actifs (14A) sont configurés pour l'interaction d'un opérateur (10) avec le système de contrôle et/ou les mobiles,
- une interface de commande (8) pour la saisie par l'opérateur de commandes à destination du système de contrôle, et
- un dispositif de pointage (6) configuré pour détecter une direction pointée par l'opérateur (10),
le système étant configuré pour sélectivement activer l'un d'une pluralité de premiers modes de fonctionnement du système de contrôle respectivement associés à l'un des éléments graphiques actifs en réponse à la détection du pointage de l'opérateur (10) sur l'élément graphique actif (14A) correspondant, chaque premier mode de fonctionnement étant configuré pour permettre à l'opérateur (10) d'interagir avec un ou plusieurs éléments graphiques (14) et/ou un ou plusieurs des mobiles via l'interface de commande (8) selon un ensemble de fonctionnalités donné.

10. Ensemble comprenant une pluralité de mobiles autonomes sans pilote et un système de contrôle des mobiles, le système étant selon la revendication 8 ou 9 et propre à contrôler la pluralité de mobiles de l'ensemble.

## Patentansprüche

1. Verfahren zum Steuern einem Mehrzahl von autonomen Fahrzeugen ohne Fahrer, wobei das Verfahren die folgenden Schritte aufweist:
- a) Liefern (100) von Eingangsparametern, die zu jedem Fahrzeug gehören,
- b) Liefern (102) von mindestens zwei Zielvorgaben, die von den Fahrzeugen zu erfüllen sind, und
- c) Zerlegen (110) der Zielvorgaben nach einem ersten Kriterium in mehrere optimale Aufgaben abhängig von den Eingangsparametern,
wobei jede optimale Aufgabe jeder Zielvorgabe einem unterschiedlichen Fahrzeug zugeordnet ist,
wobei die bei dem Lieferschritt b) (102) gelieferten Zielvorgaben einen Auftrag bilden und nachfolgend zum Lieferschritt b) (102) und vor dem Zerlegungsschritt c) (110) das Verfahren den folgenden Schritt umfasst:
- b') Bestimmen (108) einer Reihenfolge der Ausführung der Zielvorgaben des Auftrags abhängig von einem zweiten Kriterium, **dadurch gekennzeichnet, dass**
der Bestimmungsschritt die Wahl und die Ausführung eines Algorithmus zum Bestimmen der Reihenfolge der Ausführung der Zielvorgaben des Auftrags enthält, wobei der Algorithmus abhängig vom zweiten Kriterium aus verschiedenen gespeicherten Algorithmen zum Bestimmen der Reihenfolge gewählt wird und dass der Zerlegungsschritt c) abhängig von der Reihenfolge durchgeführt wird.

2. Verfahren nach Anspruch 1, bei dem die optimale Aufgabe einem von dem Fahrzeug, dem die Aufgabe zugeordnet ist, zu folgenden Weg entspricht.

3. Verfahren nach Anspruch 1 oder 2, bei dem nachfolgend auf den Zerlegungsschritt c) (110) das Verfahren den folgenden Schritt umfasst:
- d) Zuweisen (114) der optimalen Aufgabe(n), der oder denen das Fahrzeug zugeordnet ist, an jedes Fahrzeug gemäß der Reihenfolge.

4. Verfahren nach Anspruch 3 in seiner Abhängigkeit von Anspruch 2, bei dem die bei dem Zuweisungsschritt d) jedem Fahrzeug zugewiesene(n) optimale(n) Aufgabe(n) einem von dem Fahrzeug zu folgenden globalen Weg entspricht/entsprechen, wobei jeder globale Weg eine Aneinanderreihung von dem Fahrzeug zugewiesenen Aufgaben ist.

5. Verfahren nach Anspruch 4, bei dem jedes Fahrzeug angepasst ist, von einem Zustand der Teilnahme an dem Auftrag in einen Zustand des Anhaltens der Teilnahme an dem Auftrag überzugehen und bei dem nachfolgend auf den Zuweisungsschritt d) (114) und vor dem Ende der Durchführung des Auftrags durch die Fahrzeuge das Verfahren den folgenden Schritt umfasst:
- e) Erfassen (118) des Übergangs eines oder mehrerer Fahrzeuge von dem Zustand der Teilnahme an dem Auftrag in den Zustand des Anhaltens der Teilnahme an dem Auftrag,
und bei dem, wenn bei dem Erfassungsschritt e) (118) der Übergang erfasst wird, das Verfahren die folgenden Schritte umfasst:
- f) Berechnen (120) eines neuen zu folgenden globalen Weges für jedes Fahrzeug im Zustand der Teilnahme an dem Auftrag und
- g) Zuweisen (122) jedes neuen globalen Weges an das zugeordnete Fahrzeug.

6. Verfahren nach Anspruch 4, bei dem nachfolgend auf den Zuweisungsschritt d) (114) und vor dem Ende der Durchführung des Auftrags durch die Fahrzeuge das Verfahren den folgenden Schritt umfasst:
- e') Markieren (118) einer Modifikation mindestens eines der Eingangsparameter und/oder des ersten Kriteriums und/oder des zweiten Kriteriums,
und bei dem, wenn bei dem Markierungsschritt e') (118) die Modifikation markiert ist, das Verfahren die folgenden Schritte umfasst:
- f') Berechnen (120) eines neuen zu verfolgenden globalen Weges für jedes Fahrzeug, und
- g') Zuweisen (122) jedes neuen globalen Weges an das zugeordnete Fahrzeug.

7. Rechnerprogramm, das Programmcodebefehle aufweist, die geeignet sind, von einem Rechner ausgeführt zu werden, wobei das Programm geeignet ist, das Verfahren nach einem beliebigen der Ansprüche 1 bis 6 durchzuführen.

8. System (2) zum Steuern einer Mehrzahl von autonomen Fahrzeugen ohne Fahrer, umfassend:
- ein erstes Element (32) zum Speichern von Eingangsparametern, die jedem Fahrzeug eigen sind,
- ein zweites Element (34) zum Speichern von mindestens zwei von den Fahrzeugen zu erfüllenden Zielvorgaben, und
- ein Zerlegungselement (44), das geeignet ist, nach mindestens einem Kriterium jede Zielvorgabe in mehrere optimale Aufgaben abhängig von den Eingangsparametern zu zerlegen, wobei jede optimale Aufgabe jeder Zielvorgabe einem unterschiedlichen Fahrzeug zugeordnet ist und die von dem zweiten Speicherelement (34) gespeicherten Zielvorgaben einen Auftrag bilden, wobei das System ein Element (42) zum Bestimmen der Reihenfolge der Durchführung der Zielvorgaben des Auftrags abhängig von einem zweiten Kriterium umfasst, **dadurch gekennzeichnet, dass** das System eine drittes Element zum Speichern von unterschiedlichen Algorithmen der Bestimmung einer Reihenfolge der Durchführung der Zielvorgaben umfasst, wobei das Bestimmungselement geeignet ist, einen Algorithmus der Bestimmung der Reihenfolge der Durchführung der Zielvorgaben des Auftrags auszuwählen und auszuführen, wobei der Algorithmus abhängig von den zweiten Kriterium aus unterschiedlichen gespeicherten Algorithmen der Bestimmung der Reihenfolge ausgewählt wird, und dass das Zerlegungselement (44) geeignet ist, jede Zielvorgabe in mehrere optimale Aufgaben, ebenfalls abhängig von der von dem Bestimmungselement (42) bestimmten Reihenfolge zu zerlegen.

9. System nach Anspruch 8, bei dem das System außerdem umfasst:
- eine Anzeigevorrichtung (4) die ausgebildet ist, grafische Elemente (14) anzuzeigen, von denen aktive grafische Elemente (14A) für die Interaktion einer Bedienperson (10) mit dem Steuersystem und/oder den Fahrzeugen konfiguriert sind,
- eine Steuerschnittstelle (8) für die Erfassung von Befehlen für das Steuersystem durch die Bedienperson und
- eine Visiervorrichtung (6), die zum Abtasten einer von der Bedienperson (10) anvisierten Richtung ausgebildet ist,
wobei das System ausgebildet ist, selektiv eine einer Mehrzahl von ersten Funktionsweisen des Steuersystems, die jeweils einem der aktiven grafischen Elemente (14A) zugeordnet sind, als Antwort auf die Abtastung des Anvisierens der Bedienperson (10) des entsprechenden aktiven graphischen Elementes (14A) zu aktivieren, wobei jede erste Funktionsweise ausgebildet ist, der Bedienperson (10) zu ermöglichen, mit einem oder mehreren graphischen Elementen (14) und/oder einem oder mehreren der Fahrzeuge über die Steuerschnittstelle (8) nach einem gegebenen Satz von Funktionalitäten zu interagieren.

10. Gruppe, eine Mehrzahl von autonomen Fahrzeugen ohne Fahrer umfassend, wobei das System nach Anspruch 8 oder 9 ausgebildet ist und geeignet ist, die Mehrzahl von Fahrzeugen der Gruppe zu steuern.

## Claims

1. Method for controlling a plurality of autonomous unmanned vehicles, the method comprising the following steps:
- a) provision (100) of input parameters specific to each vehicle,
- b) provision (102) of at least two objectives to be fulfilled by the vehicles, and
- c) breakdown (110), in accordance with at least a first criterion, of the objectives into multiple optimal tasks as a function of the input parameters,
each optimal task of each objective being associated with a different vehicle,
the objectives provided in provision step b) (102) forming a mission, and, following provision step b) (102) and prior to the breakdown step c) (110), the method comprising the following step:
- b') determination (108) of an order of performance of the objectives of the mission as a function of a second criterion,
**characterised in that**
the determination step comprises the selection and execution of an algorithm for determination of the order of performance of the objectives of the mission, the algorithm being selected, as a function of the second criterion, from various stored algorithms for determination of the order, and **in that**
the breakdown step c) is carried out as a function of the order.

2. Method according to claim 1, wherein each optimal task corresponds to a path to be followed by the vehicle with which the task is associated.

3. Method according to claim 1 or 2, wherein, following the breakdown step c) (110), the method comprises the following step:
- d) assignment (114) to each vehicle of the optimal task or tasks with which the vehicle is associated in accordance with said order.

4. Method according to claim 3 when dependent on claim 2, wherein the optimal task or tasks assigned to each vehicle in the assignment step d) correspond(s) to an overall path to be followed by the vehicle, each overall path being a juxtaposition of the tasks assigned to the vehicle.

5. Method according to claim 4, wherein each vehicle is adapted to change from a state of participation in the mission to a state of discontinuation of participation in the mission, and wherein, following the assignment step d) (114) and prior to the end of performance of the mission by the vehicles, the method comprises the following step:
- e) detection (118) of the change of one or more vehicles from the state of participation in the mission to the state of discontinuation of participation in the mission,
and wherein, if in the detection step e) (118) said change is detected, the method comprises the following steps:
- f) computation (120), for each vehicle in a state of participation in the mission, of a new overall path to be followed, and
- g) assignment (122) of each new overall path to the associated vehicle.

6. Method according to claim 4, wherein, following the assignment step (d) (114) and prior to the end of performance of the mission by the vehicles, the method comprises the following step:
- e') identification (118) of a modification of at least one of the input parameters and/or of the first criterion and/or of the second criterion,
and wherein, if in the identification step e') (118) said modification is identified, the method comprises the following steps:
- f') computation (120), for each vehicle, of a new overall path to be followed, and
- g') assignment (122) of each new overall path to the associated vehicle.

7. Computer program comprising program code instructions capable of being carried out by a computer, wherein the program is capable of carrying out the method according to any one of claims 1 to 6.

8. System (2) for controlling a plurality of autonomous unmanned vehicles, comprising:
- a first component (32) for storing input parameters specific to each vehicle,
- a second component (34) for storing at least two objectives to be fulfilled by the vehicles,
and a breakdown component (44) capable of breaking down, in accordance with at least a first criterion, each objective into multiple optimal tasks as a function of the input parameters, each optimal task of each objective being associated with a different vehicle, the objectives stored by the second storage component (34) forming a mission, the system comprising a component (42) for determining the order of performance of the objectives of the mission as a function of a second criterion,
**characterised in that** the system comprises a third component for storing various algorithms for determination of an order of performance of the objectives,
the determination component being capable of selecting and executing an algorithm for determining the order of performance of the objectives of the mission, the algorithm being selected, as a function of the second criterion, from the various stored algorithms for determination of the order, and **in that** the breakdown component (44) is capable of breaking down each objective into multiple optimal tasks likewise as a function of the order determined by the determination component (42).

9. System according to claim 8, wherein the system further comprises:
- a display device (4) configured to display graphic elements (14), among which active graphic elements (14A) are configured for the interaction of an operator (10) with the control system and/or the vehicles,
- a command interface (8) for entry by the operator of commands intended for the control system, and
- a pointing device (6) configured to detect a direction pointed at by the operator (10),
the system being configured to selectively activate one of a plurality of first operating modes of the control system each associated with one of the active graphic elements in response to the detection of the pointing of the operator (10) at the corresponding graphic element (14A), each first operating mode being configured to allow the operator (10) to interact with one or more graphic elements (14) and/or one or more of the vehicles *via* the command interface (8) in accordance with a given set of functionalities.

10. Assembly comprising a plurality of autonomous unmanned vehicles and a system for controlling the vehicles, the system being in accordance with claim 8 or 9 and capable of controlling the plurality of vehicles of the assembly.
